# EUROPEAN PATENT APPLICATION

(11) **EP 2 680 134 A1**
(43) Date of publication of application: **01.01.2014**
(21) Application number: 13001983.9
(22) Date of filing: 16.04.2013
(51) Int. Cl.: G06F 9/44, H04M 1/725

(54) **Mobile terminal and control method thereof**

(30) Priority: 28.06.2012 KR 20120070241
(71) Applicant: LG Electronics, Inc., Seoul 150-721 (KR)
(72) Inventor: Yun, Yeerang, Seoul (KR)
(74) Representative: Urner, Peter

(57) **Abstract**

A mobile terminal (100) supporting a multi-tasking function and a control method thereof are provided. A mobile terminal (100) includes a display unit (151), and a controller (180). The display unit (151) displays an execution screen of an application being executed on a foreground. The controller (180) monitors applications being executed on a background. The controller (180) selects at least one of the applications on the background, and controls the display unit (151) to display a control menu for the selected application together with the execution screen of the application being executed on the foreground.

## Description

### BACKGROUND

### 1. Field of the Invention

The present disclosure relates to a mobile terminal, and particularly, to a mobile terminal supporting a multi-tasking function and a control method thereof.

### 2. Description of the Conventional Art

Terminals can be divided into mobile/portable terminals and stationary terminals according to their mobility. The portable terminals can be divided into handheld terminals and vehicle mount terminals according to whether a user directly carries his or her terminal.

As such a mobile terminal becomes multifunctional, the mobile terminal can be allowed to capture still images or moving images, play music or video files, play games, receive broadcast, etc., so as to be implemented as an integrated multimedia player. In order to support and enhance such functions of the terminal, it can be considered to improve configuration and/or software of the terminal.

Under the influence of the improvement, a mobile terminal having a multi-tasking function for simultaneously executing a plurality of applications is mass-produced. However, control menus for the respective applications being executed by the multi-tasking function cannot be simultaneously displayed on one screen due to the limited screen size of the mobile terminal. As a result, a user should perform complicated manipulation of the mobile terminal so as to control some applications being executed on a background of the mobile terminal.

### SUMMARY

Therefore, an aspect of the detailed description is to provide a mobile terminal and a control method thereof, which can simply control an application being executed by a user in a multi-tasking environment.

To achieve these and other advantages and in accordance with the purpose of this specification, as embodied and broadly described herein, a mobile terminal includes a display unit configured to display an execution screen of an application being executed on a foreground; a controller configured to monitor applications being executed on a background; and select at least one of the applications on the background, and control the display unit to display a control menu for the selected application together with the execution screen of the application being executed on the foreground.

In one exemplary embodiment, the controller may select the at least one application for which control menu is to be displayed on the display unit, based on the priority order of the applications being executed on the background.

In one exemplary embodiment, the controller may display the execution screen of the selected application on the display unit, based on a touch input applied to the control menu for the selected application.

In one exemplary embodiment, the display unit may display a home screen, and the controller may control the display unit to display the control menu for the selected application together with the home screen.

In one exemplary embodiment, the control menu may include an icon for changing the selected application into another application. As the selected application is changed into the another application, based on a touch input applied to the icon, the controller may allow the control menu for the selected application to disappear from the display unit, and may display a control menu for the changed application on the display unit.

In one exemplary embodiment, the controller may display, on the display unit, an execution screen of the changed application together with the control menu for the changed application.

In one exemplary embodiment, the control menu may include an objective for displaying a list of the plurality of applications being executed on the foreground and background. When a touch input applied to the objective for displaying the list is sensed, the controller may display the list of the plurality of applications on the display unit.

In one exemplary embodiment, when any one is touched in the list of the plurality of applications, the controller may display an execution screen of the touched application on the display unit.

In one exemplary embodiment, the list of the plurality of applications may include preview screens respectively corresponding to the plurality of applications.

In one exemplary embodiment, the controller may display, on the display unit, objectives respectively corresponding to the plurality of applications being executed on the foreground and background.

In one exemplary embodiment, when a first touch input applied to at least one of the objectives respectively corresponding to the plurality of applications is sensed, the controller may display, on the display unit, a preview screen of the application correspond to the touched objective. When a second touch input applied to the at least one is sensed, the controller may display, on the display unit, an execution screen of the application corresponding to the touched objective.

In one exemplary embodiment, the preview screen of the application corresponding to the touched objective may include an icon for terminating the application.

In one exemplary embodiment, when a touch input applied to the icon for terminating the application is sensed, the controller may terminate the application, and may allow the objective corresponding to the terminated application to disappear from the display unit.

In one exemplary embodiment, the objectives corresponding to the plurality of applications may include thumbnail images corresponding to the plurality of applications, respectively.

To achieve these and other advantages and in accordance with the purpose of this specification, as embodied and broadly described herein, a control method of a mobile terminal includes displaying, on a display unit, an executing screen of an application being executed on a foreground; monitoring applications being executed on a background; selecting at least one of the applications being executed on the background; and controlling the display unit to display a control menu for the selected application together with the execution screen of the application being executed on the foreground.

In one exemplary embodiment, the selecting of the at least one of the applications being executed on the background may include selecting the at least one application for which control menu is to be displayed on the display unit, based on the priority order of the applications being executed on the background.

In one exemplary embodiment, the control method may further include displaying the execution screen of the selected application on the display unit, based on a touch input applied to the control menu for the selected application.

In one exemplary embodiment, the control method may further include displaying a home screen on the display unit; and controlling the display unit to display the control menu for the selected application together with the home screen.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a mobile terminal related to the present disclosure;
FIGS. 2A and 2B are perspective views illustrating exterior appearances of the mobile terminal related to the present disclosure;
FIG. 3 is a flowchart illustrating an exemplary embodiment of the mobile terminal related to the present disclosure; and
FIGS. 4 to 13 are conceptual views illustrating operation examples of a mobile terminal according to FIG. 3.

### DETAILED DESCRIPTION OF EXEMPLARY EMBODIMENTS

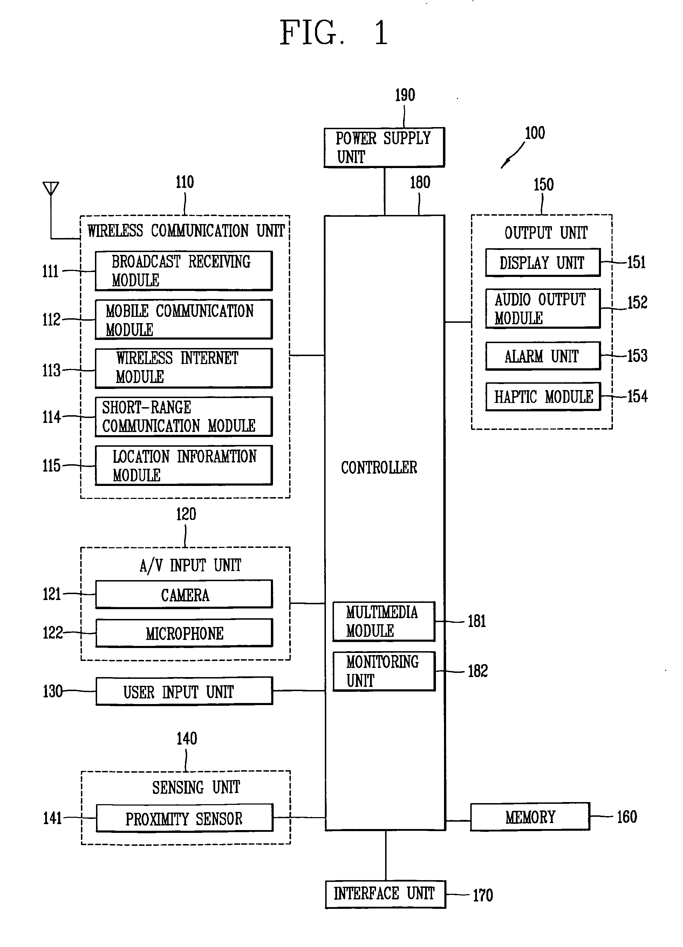

FIG. 1 is a block diagram of a mobile terminal 100 according to an embodiment of the present invention.

As shown in FIG. 1, the mobile terminal 100 includes a wireless communication unit 110, an A/V (AudioNideo) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. The mobile terminal 100 may be implemented by greater or fewer components.

Hereinafter, each of the above components 110-190 will be explained.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. The broadcast associated information may refer to information associated with a broadcast channel, a broadcast program or a broadcast service provider. The broadcast associated information may also be provided via a mobile communication network and, in this case, the broadcast associated information may be received by the mobile communication module 112. Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for acquiring a location (or position) of the mobile communication terminal. For example, the location information module 115 may include a GPS (Global Positioning System) module.

The A/V input unit 120 is configured to receive an audio or video signal. The AN input unit 120 may include a camera 121 and a microphone 122. The camera 121 processes image data of still pictures or video acquired by an image capture device in a video capturing mode or an image capturing mode. The processed image frames may be displayed on a display unit 151. The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of a user's touch (contact) with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The sensing unit 140 may include a proximity sensor 141. And, the sensing unit 140 may include a touch sensor (not shown) for sensing a touch operation with respect to the display unit 151.

The touch sensor may be implemented as a touch film, a touch sheet, a touch pad, and the like. The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

If the touch sensor and the display unit 151 have a layered structure therebetween, the display unit 151 may be used as an input device rather than an output device. Such display unit 151 may be called a 'touch screen'.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

When the touch screen is implemented as a capacitance type, proximity of a pointer to the touch screen is sensed by changes of an electromagnetic field. In this case, the touch screen (touch sensor) may be categorized into a proximity sensor 141.

The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor. The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on.

In the following description, for the sake of brevity, recognition of the pointer positioned to be close to the touch screen without being contacted will be called a 'proximity touch', while recognition of actual contacting of the pointer on the touch screen will be called a 'contact touch'.

The proximity sensor 141 detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The output unit 150 is configured to provide outputs in a visual, audible, and/or tactile manner (e.g., audio signal, video signal, alarm signal, vibration signal, etc.). The output unit 150 may include the display unit 151, an audio output module 153, an alarm unit 154, a haptic module 155, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or a capturing mode, the display unit 151 may display a captured and/or received image or a GUI or a UI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of these displays may be configured to be transparent so that outside may be seen therethrough, which may be referred to as a transparent display. A representative example of this transparent display may include a transparent organic light emitting diode (TOLED), etc. The rear surface portion of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of displays may be arranged on one surface integrally or separately, or may be arranged on different surfaces.

The audio output module 153 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 154 outputs a signal for informing about an occurrence of an event of the mobile terminal 100. Events generated in the mobile terminal may include call signal reception, message reception, key signal inputs, and the like. In addition to video or audio signals, the alarm unit 154 may output signals in a different manner, for example, to inform about an occurrence of an event. For example, the alarm unit 154 may output a signal in the form of vibration. Such video signal or audio signal may be output through the display unit 151 or the audio output module 153. Accordingly, the display unit 151 or the audio output module 153 may be categorized into part of the alarm unit 154.

The haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a map data, phonebook, messages, still images, video, etc.) that are inputted or outputted. The memory 160 may store therein data on vibrations and sounds of various patterns output when a touch is input onto the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

Here, the identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180. The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

Hereinafter, will be explained a method for processing a user's input to the mobile terminal 100.

The user input unit 130 is manipulated to receive a command for controlling the operation of the mobile terminal 100, and may include a plurality of manipulation units. The manipulation units may be referred to as manipulating portions, and may include any type of ones that can be manipulated in a user's tactile manner.

Various types of visible information may be displayed on the display unit 151. Such information may be displayed in several forms, such as character, number, symbol, graphic, icon or the like. Alternatively, such information may be implemented as a 3D stereoscopic image. For input of the information, at least one of characters, numbers, graphics or icons may be arranged and displayed in a preset configuration, thus being implemented in the form of a keypad. Such keypad may be called 'soft key.'

The display unit 151 may be operated as a single entire region or by being divided into a plurality of regions. For the latter, the plurality of regions may cooperate with one another. For example, an output window and an input window may be displayed at upper and lower portions of the display unit 151, respectively. Soft keys representing numbers for inputting telephone numbers or the like may be output on the input window. When a soft key is touched, a number or the like corresponding to the touched soft key is output on the output window. Upon manipulating the manipulation unit, a call connection for a telephone number displayed on the output window is attempted, or a text output on the output window may be input to an application.

In addition to the input manner illustrated in the embodiments, the display unit 151 or the touch pad may be scrolled to receive a touch input. A user may scroll the display unit 151 or the touch pad to move a cursor or pointer positioned on an object (subject), e.g., an icon or the like, displayed on the display unit 151. In addition, in case of moving a finger on the display unit 151 or the touch pad, the path of the finger being moved may be visibly displayed on the display unit 151, which can be useful upon editing an image displayed on the display unit 151.

One function of the mobile terminal may be executed in correspondence with a case where the display unit 151 (touch screen) and the touch pad are touched together within a preset time. An example of being touched together may include clamping a body with the user's thumb and index fingers. The one function, for example, may be activating or deactivating of the display unit 151 or the touch pad.

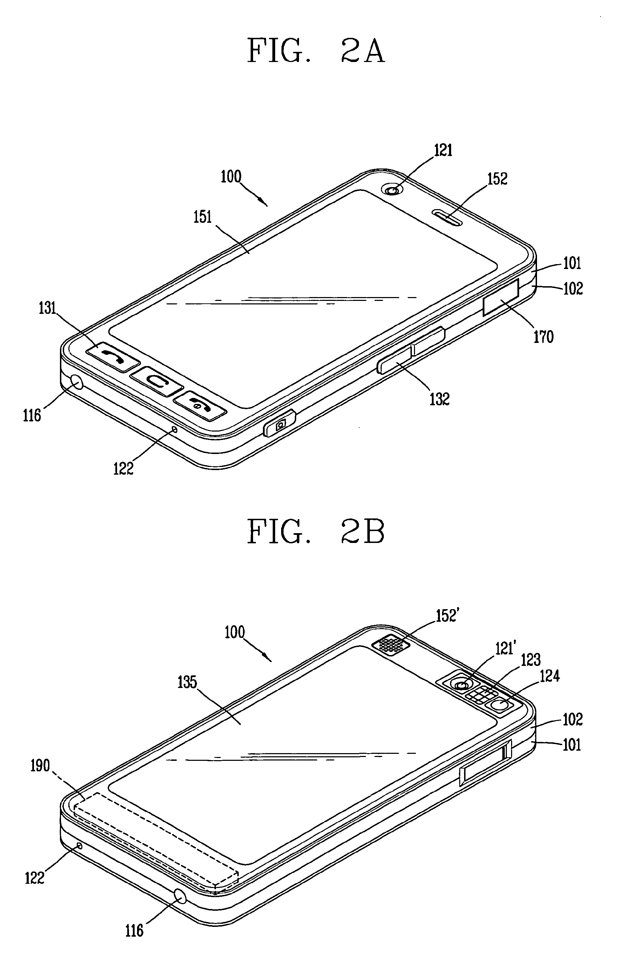

FIGS. 2A and 2B are perspective views showing the appearance of the mobile terminal 100 according to the present invention. FIG. 2A is a view showing a front surface and one side surface of the mobile terminal 100 in accordance with the present invention, and FIG. 2B is a view showing a rear surface and another side surface of the mobile terminal 100 of FIG. 2A.

As shown in FIG. 2A, the mobile terminal 100 is a bar type mobile terminal. However, the present invention is not limited to this, but may be applied to a slide type in which two or more bodies are coupled to each other so as to perform a relative motion, a folder type, or a swing type, a swivel type and the like.

A case (casing, housing, cover, etc.) forming an outer appearance of a body may include a front case 101 and a rear case 102. A space formed by the front case 101 and the rear case 102 may accommodate various components therein. At least one intermediate case may further be disposed between the front case 101 and the rear case 102.

Such cases may be formed by injection-molded synthetic resin, or may be formed using a metallic material such as stainless steel (STS) or titanium (Ti).

At the front case 101, may be disposed a display unit 151, an audio output unit 152, a camera 121, a user input unit 130 (refer to FIG. 1), a microphone 122, an interface unit 170, etc.

The display unit 151 occupies most parts of a main surface of the front case 101. The audio output unit 152 and the camera 121 are arranged at a region adjacent to one end of the display unit 151, and the user input unit 131 and the microphone 122 are arranged at a region adjacent to another end of the display unit 151. The user input unit 132, the interface unit 170, etc. may be arranged on side surfaces of the front case 101 and the rear case 102.

The user input unit 130 is manipulated to receive a command for controlling the operation of the mobile terminal 100, and may include a plurality of manipulation units 131 and 132.

The manipulation units 131 and 132 may receive various commands. For instance, the first manipulation 131 is configured to input commands such as START, END, SCROLL or the like, and the second manipulation unit 132 is configured to input commands for controlling a level of sound outputted from the audio output unit 152, or commands for converting the current mode of the display unit 151 to a touch recognition mode.

Referring to FIG. 2B, a camera 121' may be additionally provided on the rear case 102. The camera 121' faces a direction which is opposite to a direction faced by the camera 121 (refer to FIG. 2A), and may have different pixels from those of the camera 121.

For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use.

The cameras 121 and 121' may be installed at the terminal body so as to rotate or pop-up.

A flash 123 and a mirror 124 (not shown) may be additionally disposed close to the camera 121'. The flash 123 operates in conjunction with the camera 121' when taking a picture using the camera 121'. The mirror 124 can cooperate with the camera 121' to allow a user to photograph himself in a self-portrait mode.

An audio output unit 152' may be additionally arranged on a rear surface of the terminal body. The audio output unit 152' may cooperate with the audio output unit 152 (refer to FIG. 2A) disposed on a front surface of the terminal body so as to implement a stereo function. Also, the audio output unit 152' may be configured to operate as a speakerphone.

A broadcast signal receiving antenna 116 as well as an antenna for calling may be additionally disposed on a side surface of the terminal body. The broadcast signal receiving antenna 116 of the broadcast receiving module 111 (refer to FIG. 1) may be configured to retract into the terminal body.

A power supply unit 190 for supplying power to the mobile terminal 100 is mounted to the body. The power supply unit 190 may be mounted in the body, or may be detachably mounted to the body.

A touch pad 135 for sensing touch may be additionally mounted to the rear case 102. Like the display unit 151 (refer to FIG. 2A), the touch pad 135 may be formed to be light-transmissive. The touch pad 135 may be also additionally mounted with a rear display unit for outputting visual information. Information output from the display unit 151 (front display) and the rear display can be controlled by the touch pad 135.

The touch pad 135 operates in association with the display unit 151. The touch pad 135 may be disposed on the rear surface of the display unit 151 in parallel. The touch pad 135 may have a size equal to or smaller than that of the display unit 151.

In an exemplary embodiment, the mobile terminal 100 may perform a multi-tasking function. In this specification, the term 'multi-tasking' means executing a plurality of applications at the same time. The plurality of applications are not applications connected with one another but may be independent applications. That is, the multi-tasking does not limited to executing an application incidental or supplementary to any one application, but means simultaneously executing several individual applications having the same level. Here, the application refers to any one of, for example, an online service, a message function, a telephone call function, a camera function and various additional functions of reproducing a moving picture, music file, etc.

The term that an application 'is being performed or executed' means a state before the application is executed and then finished, and the term 'activation' of an application means a state in which the application being executed is not displayed on a background of a display but displayed on a foreground of the display. On the other hand, the term 'non-activation' of an application means a state in which the application being executed is not displayed on a foreground of a display but displayed on a background of the display.

Hereinafter, a mobile terminal 100 and a control method thereof, which can simply control an application being executed by a user in a multi-tasking environment will be described with reference to the accompanying drawings.

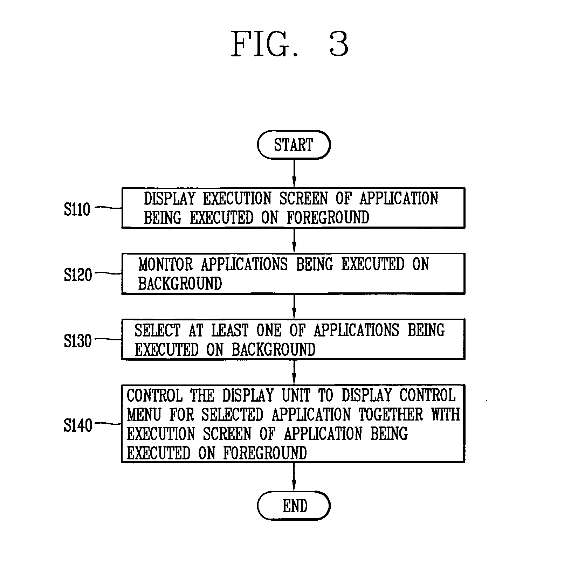

FIG. 3 is a flowchart illustrating an exemplary embodiment of the mobile terminal 100 (See FIG. 1) related to the present disclosure. The mobile terminal 100 includes the display unit 151 (See FIG. 1), and the controller 180 (See FIG. 1).

Referring to FIG. 3, an execution screen of an application being executed on a foreground is first displayed (S110).

Specifically, the display unit 151 may display an execution screen of an application being executed on the foreground, i.e., an execution screen of an activated application.

Next, applications being executed on a background is monitored (S120), and at least one of the applications being executed on the background is selected (S130).

Specifically, the controller 180 may perform a multi-tasking function of executing a plurality of applications at the same time. The controller 180 may monitor the plurality of applications being executed. The controller 180 may select at least one application for which control menu is to be displayed on the display unit 151 among the plurality of applications, according to the monitored result. More specifically, the controller 180 may select at least one application for which control menu is to be displayed on the display unit 151, based on the priority order of the applications being executed on the background.

Subsequently, the controller 181 controls the display unit 151 to display a control menu for the selected application together with the execution screen of the application being executed on the foreground (S140).

Specifically, the controller 180 may display, on the display unit 151, a control menu for the application selected based on the priority order of the applications being executed on the background. In this case, the operation of the selected application may be controlled, based on a touch input applied to the control menu. A user may hide the control menu from the display unit 151 through the touch input applied to the control menu. The control unit 180 may display an icon for re-displaying the control menu on the display unit 151 while hiding the control menu from the display unit 151.

In a case where another touch input is applied to the control menu, the controller 180 controls the display unit 180 to display the execution screen of the selected application. In this case, the execution screen of the application, which has been previously displayed on the display unit 151, may disappear from the display unit 151, or may be displayed, on the display unit 151, the execution screen of the selected application together with the execution screen of the application, which has been previously displayed on the display unit 151.

Meanwhile, the application for which control menu is to be displayed on the display unit 151 may be changed or added, based on a touch input applied to the display unit 151. Here, the touch input may include at least one of a single-tap input, a double-tap input, a drag input, a flick input and a multi-touch input.

Specifically, when still another touch is applied to the control menu or when an icon for changing an application is selected, the controller 180 may change the selected application into another application. Accordingly, the control menu for the selected application disappears from the display unit 151, and a control menu for the changed application can be displayed on the display unit 151.

When still another touch input is applied to the control menu or when an icon for adding an application is selected, the controller 180 may select a new application. Accordingly, a control menu for the selected application can be displayed, on the display unit 151, together with the control menu which has been previously displayed on the display unit 151.

Although not shown in this figure, the control menu may include various information. As an example, the control menu for a music playback application may include information related to music being played back. In this case, if a touch input is applied to the control menu, a music list may be displayed on the display unit 151. If any one is selected from the music list, the selected music may be played back.

As another example, the control menu for a web browser application may include a web browser address. In this case, if a touch input is applied to the control menu, preview screens for a plurality of web browsers being executed may be displayed on the display unit 151. If any one is selected from the preview screens, a web browser screen corresponding to the selected preview screen may be displayed on the display unit 151. The preview screen may include an icon for closing the web browser.

As still another example, the control menu for a message communication application may include a message input window. The control menu for the message communication application may be displayed on a popup window. In this case, if a touch input is applied to the message input window, the controller 180 may display a virtual keypad on the display unit 151. Simultaneously, the positions of other control menus which have been previously displayed on the display unit 151 may be changed.

As described above, according to the exemplary embodiment, the control menu for at least one of applications being executed on the background is displayed together with the execution screen of an application being executed on the foreground, so that the user can directly control the application being executed on the background without accessing an application management module.

Further, an application being executed on the background can be simply finished, based on a touch input sensed on the execution screen or home screen of an application being executed on the foreground. That is, the complicated process for terminating an application being unnecessarily executed can be omitted. As a result, the user can more conveniently mange resources of the mobile terminal, such as memory capacity and power necessary for executing applications.

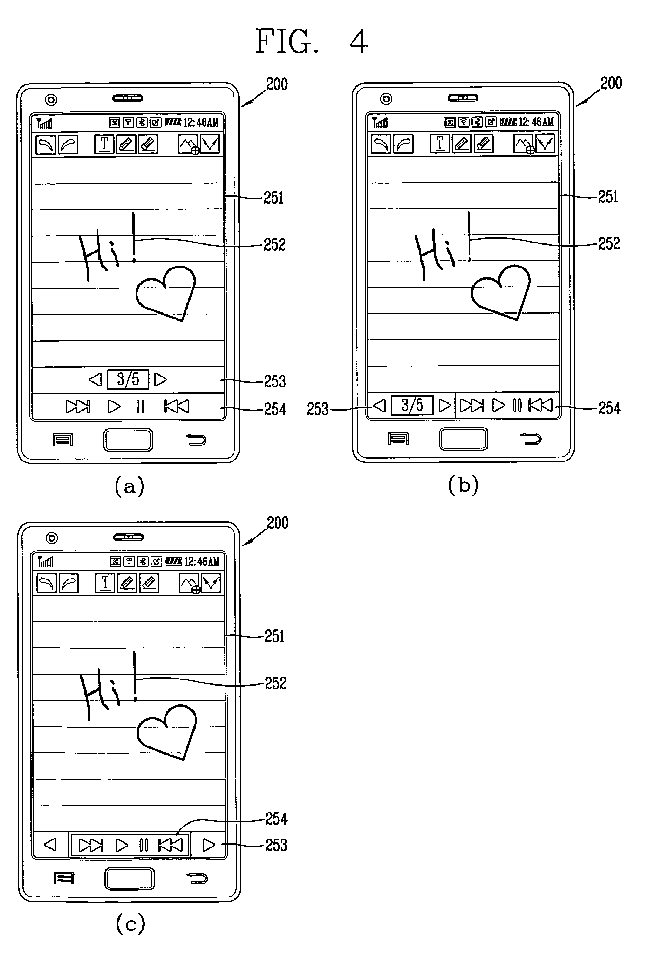

FIG. 4 is a conceptual view illustrating an operation example of a mobile terminal 200 according to FIG. 3. The mobile terminal 200 includes a display unit 251, and the controller 180 (See FIG. 1).

Referring to FIG. 4, the display unit 251 may display an execution screen 252 of an application (e.g., a notebook application) being executed on a foreground. The execution screen of the notebook application may include a control menu 253 for the notebook application. The control menu 253 for the notebook application may include at least one of an icon representing a page, an icon for turning the page forward and an icon for turning the page backward.

The controller 180 may perform a multi-tasking function of executing a plurality of applications at the same time. The controller 180 monitors the plurality of applications being executed, and the controller 180 may select at least one of the plurality of applications, based on the priority order of the plurality of applications. Although it has been illustrated in this figure that one application is selected, the number of applications selected may be two or more.

The controller 180 may display a control menu 254 for the selected application (e.g., a music playback application) on the display unit 251. Accordingly, the display unit 251 can display, on one screen, the execution screen of the notebook application, the control menu 253 for the notebook application and the control menu 254 for the music playback application.

The control menu 253 for the notebook application and the control menu 254 for the music playback application may be respectively placed on two lines as shown in FIG. 4 (a), or may be placed together on one line as shown in FIGS. 4(a) and 4(b).

However, the placement of the control menus 253 and 254 is not limited thereto. For example, the control menu 254 for the music playback application being executed on the background may be placed at an arbitrary position of the execution screen 253 of the notebook application being executed on the foreground, and the degree of transparency may be controlled to secure a user's sight.

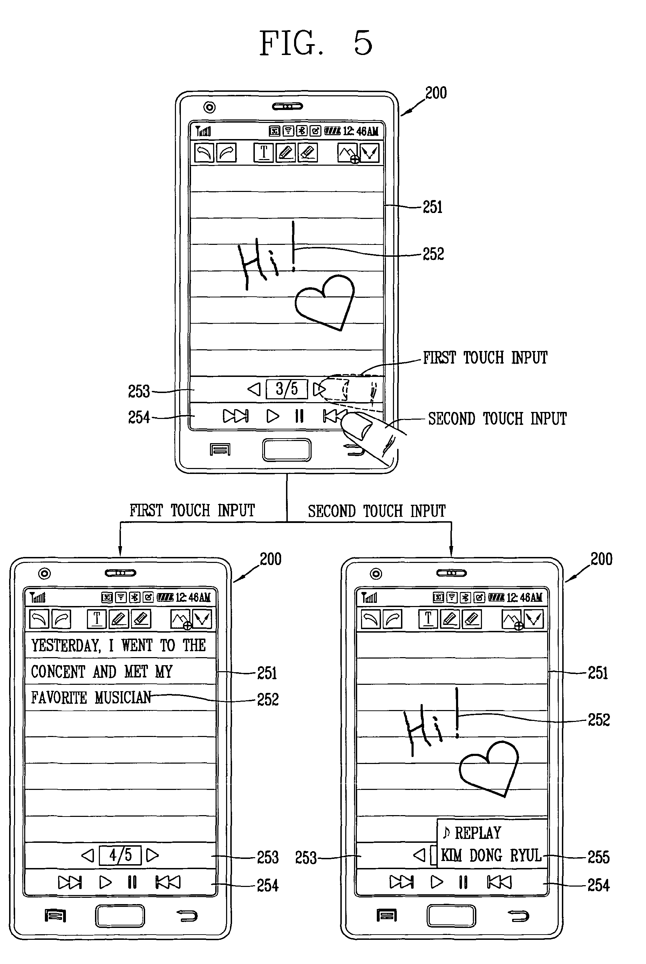

FIG. 5 is a conceptual view illustrating an operation example of the mobile terminal 200 according to FIG. 3. The mobile terminal 200 includes the display unit 251, and the controller 180 (See FIG. 1).

Referring to FIG. 5, the display unit 251 may display, on one screen, an execution screen 252 of a notebook application being executed on the foreground, a control menu 253 of the notebook application, and a control menu 254 for a music playback application being executed on the background.

In this case, a user may control an operation of the notebook application, based on a touch input applied to the control menu 253 for the notebook application. For example, a touch input applied to an icon for turning a page forward is sensed, the controller 180 may display the next page as the execution screen of the notebook application on the display unit 251.

Meanwhile, the user may control an operation of the music playback application, based on a touch input applied to the control menu 254 for the music playback application. For example, in a case where a touch input applied to an icon for playing back next music is sensed, the controller 180 may play back the next music. In this case, a message 255 for informing the user that the next music has been played back may be displayed on the display unit 251 for a predetermined time, e.g., a few seconds.

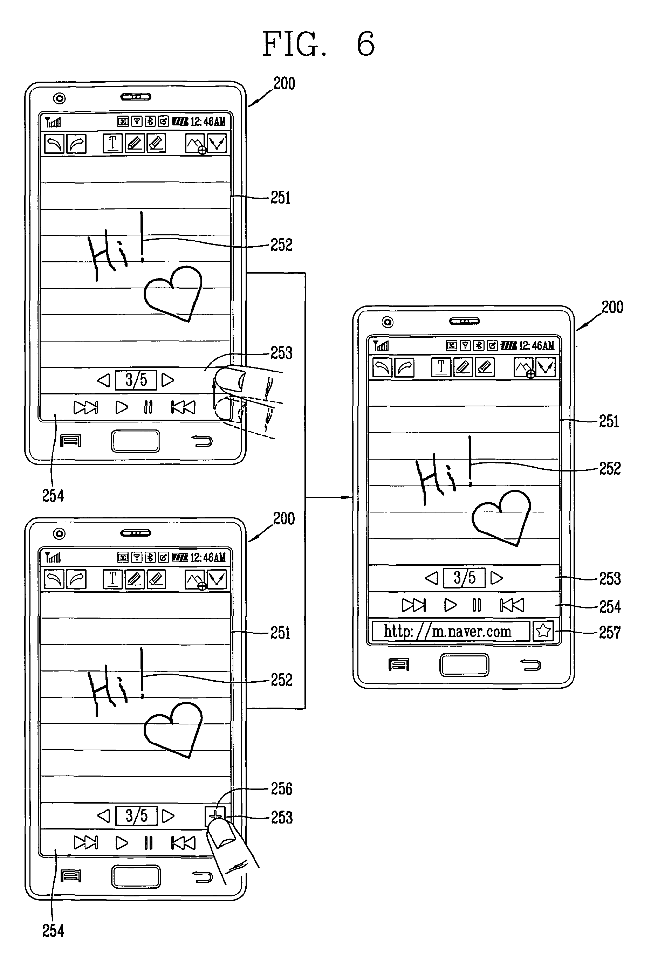

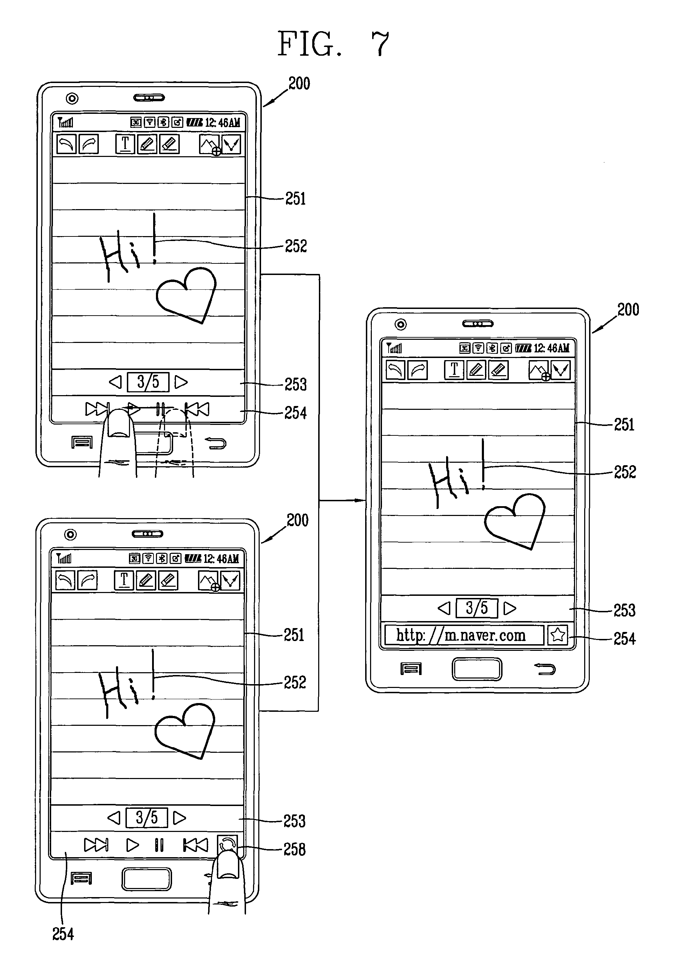

FIGS. 6 and 7 are conceptual views illustrating operation examples of the mobile terminal 200 according to FIG. 3. The mobile terminal 200 includes the display unit 251, and the controller 180 (See FIG. 1).

The controller 180 may select at least one (e.g., a music playback application) of a plurality of applications, based on the priority order of the plurality applications being executed on the background.

Accordingly, the display unit 251 can display, on one screen, an execution screen 252 of a notebook application being executed on the foreground, a control menu 253 for the notebook application, and a control menu 254 for the music playback application being executed on the background.

Referring to FIG. 6, the controller 180 may additionally select at least one of the other applications being executed on the background. As shown in this figure, when a touch input is applied to the control menu 254 for the music playback application or when an icon 256 for adding an application, the controller 180 may additionally select at least one of the other applications being executed on the background.

Accordingly, a control menu 257 for the additionally selected application (e.g., a web browser application) may be displayed, on the display unit 251, together with the previously displayed control menus 253 and 254.

Referring to FIG. 7, the controller 180 may select at least one of the other applications being executed on the background so as to change the application for which control menu is to be displayed on the display unit 251 into another application. As shown in this figure, when a touch input is applied to the control menu 254 for the music playback application or when an icon 258 for changing the application is selected, the controller 180 may select at least one of the other applications being executed on the background.

Accordingly, the previously displayed control menu for the music playback application disappears from the display unit 251, and the control menu 254 for the selected application (e.g., the web browser application) may be displayed, on the display unit 251, together with the control menu 253 for the notebook application.

Although not shown in this figure, as the control menu 254 for the web browser application is displayed on the displayed unit 251, a control screen for the web browser application may be displayed on the display unit 251. In this case, the control screen 252 for the notebook application may disappear from the display unit 251, and the control screen for the web browser application may be displayed, on the display unit 251, together with the control screen 252 for the notebook application.

As shown in this figure, the control menu 254 for the web browser application may be displayed, on the display unit 251, together with the control screen 252 of the notebook application. That is, only the control menu may be changed. In this case, the control menu 254 for the web browser application may include a lock icon (not shown).

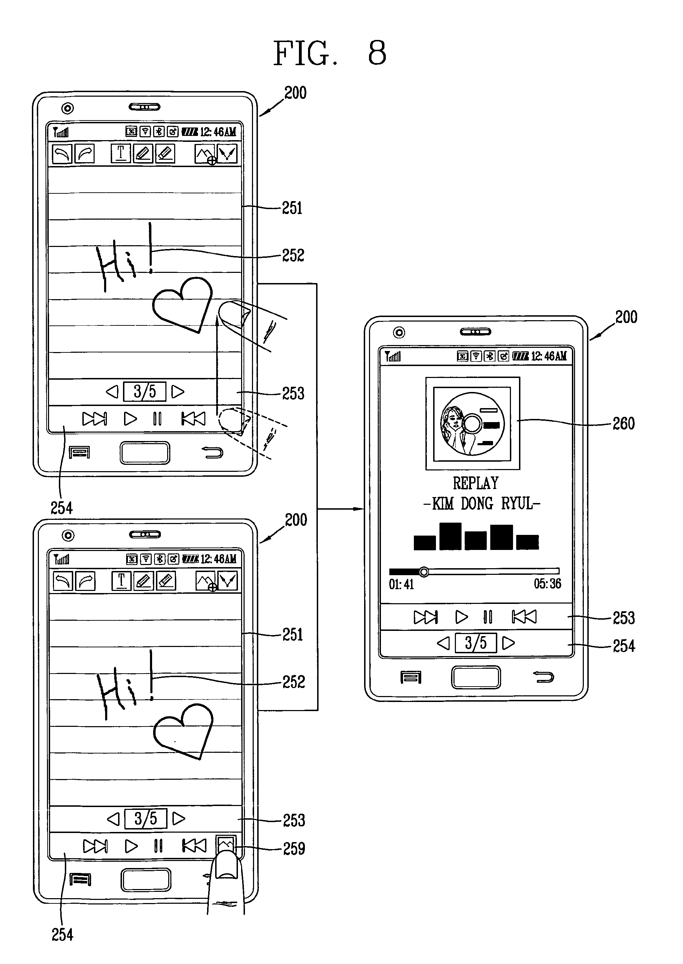

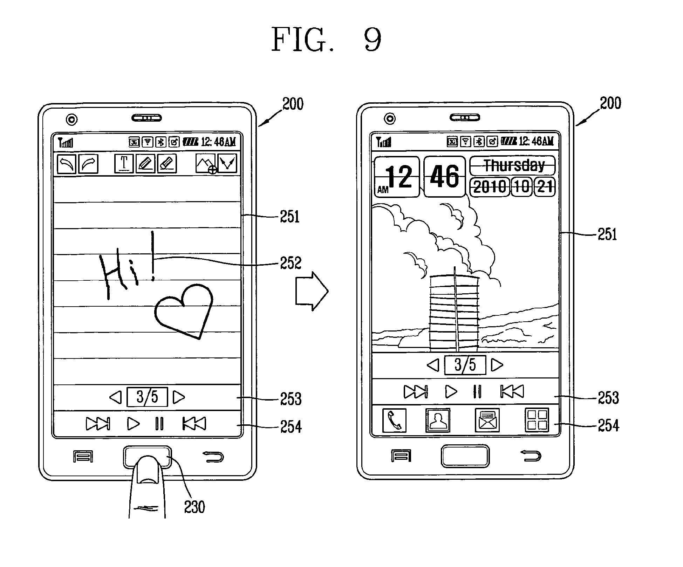

FIGS. 8 and 9 are conceptual views illustrating operation examples of the mobile terminal 200 according to FIG. 3. The mobile terminal 200 includes the display unit 251, and the controller 180 (See FIG. 1).

The display unit 251 may display, on one screen, an execution screen 252 of a notebook application being executed on the foreground, a control menu 253 for the notebook application, and a control menu 254 for a music playback application for a music playback application being executed on the background.

Referring to FIG. 8, when a touch input is applied to the control menu 254 for the music playback application or when an icon 259 for displaying an execution screen of an application is selected, the controller 180 may display, on the display unit 251, an execution screen of the music playback application being executed on the background.

Accordingly, the previously displayed execution screen 252 of the notebook application disappears from the display unit 251, and the execution screen 260 of the music playback application may be displayed on the display unit 251.

Referring to FIG. 9, the controller 180 may display a home screen on the display unit 251, based on an input applied to the user input unit 130 (See FIG. 1). As the home screen is displayed on the display unit 251, the notebook application may be non-activated. That is, the notebook application may also be executed on the background.

In this case, the controller 180 may display, on the display unit 251, at least one of the previously displayed control menu 253 for the notebook application and the previously displayed control menu 254 for the music playback application together with the home screen. Accordingly, a user can control the operation of the application being executed on the background even in the state in which the home screen is displayed on the display unit 251.

Although not shown in this figure, the controller 180 may change the control menu displayed together with the home screen into a control menu for another application, based on a touch input applied to the control menus 253 and 254 displayed together with the home screen.

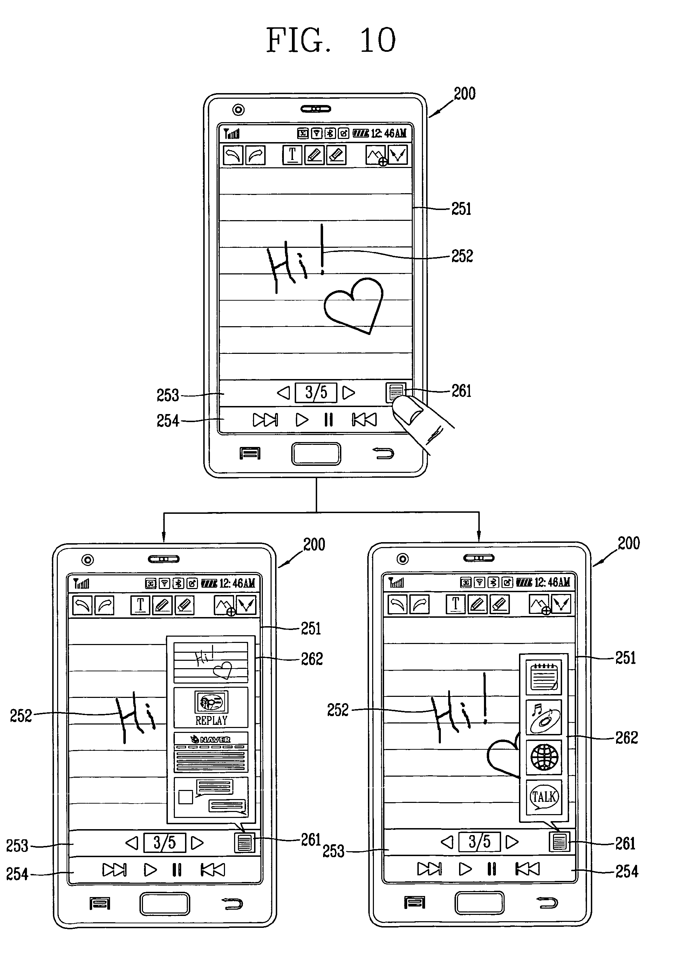

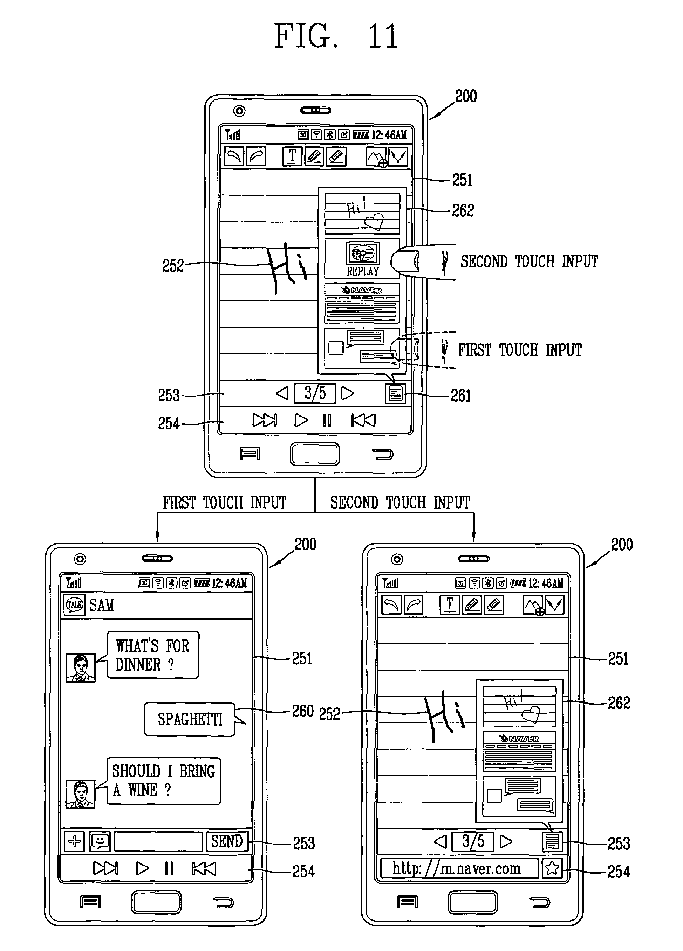

FIGS. 10 and 11 are conceptual views illustrating operation examples of the mobile terminal 200 according to FIG. 3. The mobile terminal 200 includes the display unit 251, and the controller 180 (See FIG. 1).

Referring to FIG. 10, the display unit 251 may display, on one screen, an execution screen 252 of a notebook application being executed on the foreground, a control menu 253 for the notebook application, and a control menu 254 for a music playback application being executed on the background.

The controller 180 may display, on the display unit, a list 262 of a plurality of applications being executed. For example, if an objective 261 for displaying a list of applications is selected, the controller 180 may display, on the display unit 251, the list of the plurality of applications being executed on the foreground and background, or may display, on the display unit 251, a list of a plurality of applications being executed on the background.

As shown in this figure, the list 262 of the applications may include preview screens for the respective applications, and may include icons corresponding to the respective applications.

Referring to FIG. 11, in a touch input is applied to any one in the list 262 of the plurality of applications, the controller 180 may display an execution screen of the touched application on the display unit 251 or may terminate the touch application, based on the kind of the applied touch input.

As shown in this figure, in a case where a first touch input is applied to a preview screen for a message communication application in the list 262 of the plurality of applications, the controller 180 may display an execution screen 260 of the message communication application on the display unit 251. The execution screen 260 of the message communication application may include a control menu 253 for the message communication application.

Accordingly, the display unit 251 can simultaneously display the execution screen 260 of the message communication application, the control menu 253 for the message communication application, and the control menu 254 for the music playback application being executed on the background.

Meanwhile, in a case where a second touch input is applied to a preview screen for the music playback application, the controller 180 may terminate the music playback application. Accordingly, the preview screen for the music playback application can disappear in the list 262 of the plurality of applications.

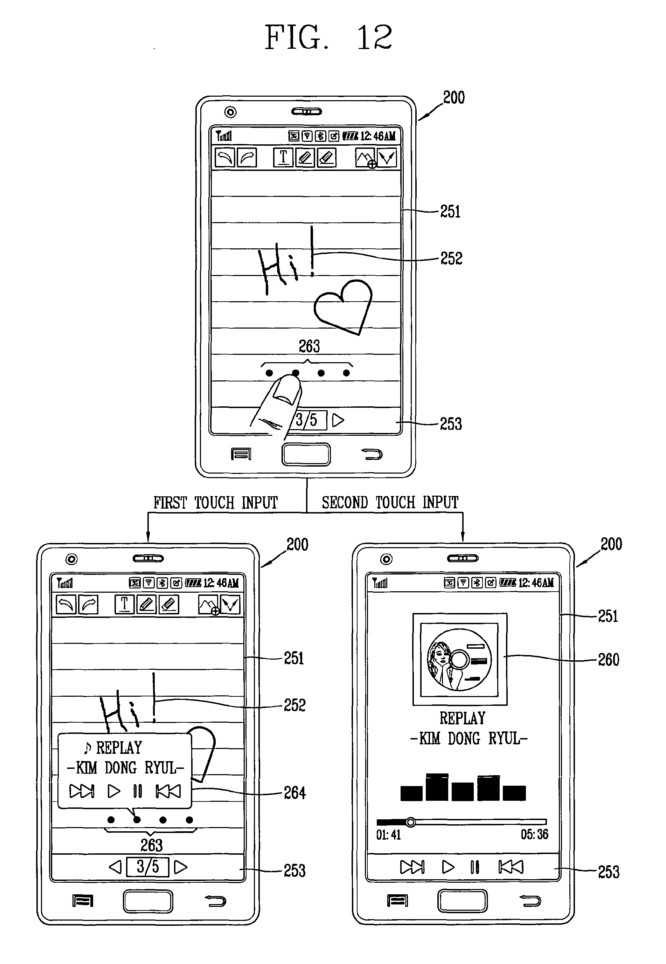

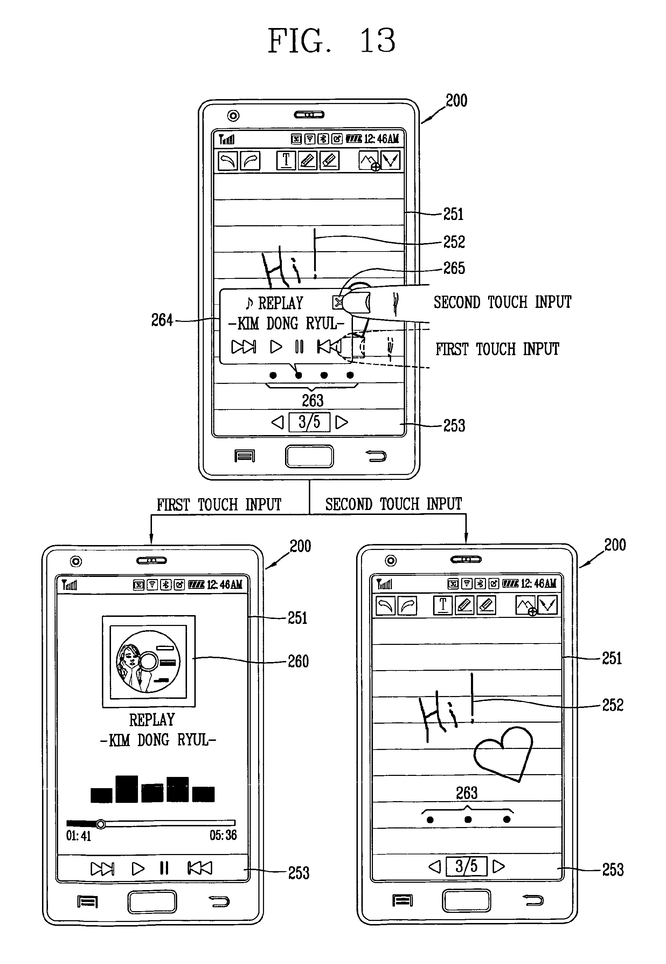

FIGS. 12 and 13 are conceptual views illustrating operation examples of the mobile terminal 200 according to FIG. 3. The mobile terminal 200 includes the display unit 251, and the controller 180 (See FIG. 1).

Referring to FIG. 12, the display unit 251 may display, on one screen, an execution screen 252 of a notebook application being executed on the foreground, a control menu 253 for the notebook application, and a control menu 254 for a music playback application.

The controller 180 may display, on the display unit 251, objectives 263 respectively corresponding to a plurality of applications being executed. For example, the controller 180 may display, on the display unit 251, the objectives 263 respectively corresponding to the plurality of applications being executed on the foreground and background, or may display, on the display unit 251, objectives respectively corresponding to a plurality of applications being executed on the background. In this case, the size of the objectives 263 may be changed depending on the number of the objectives 263.

As shown in this figure, in a case where a first touch input is applied to at least one of the objectives 263 respectively corresponding to the plurality of applications, the controller 180 may display, on the display unit 251, a preview screen 264 of the application (e.g., the music playback application) corresponding to the touched objective. In this case, the preview screen 264 may include the control menu for the music playback application.

Meanwhile, in a case where a second touch input is applied to at least one of the objectives 263 respectively corresponding to the plurality of applications, the controller 180 may display, on the display unit 251, an execution screen 260 of the application (e.g., the music playback application) corresponding to the touched objective. The execution screen 260 may include the control menu 253 for the music playback application.

In this case, the control menu 254 for the music playback application and the control menu 253 for the notebook application may be displayed together on the display unit 251. As shown in this figure, the control menu 253 for the notebook application may disappear from the display unit 251.

Referring to FIG. 13, in a case where a first touch input is applied to the preview screen 264 of the music playback screen in the state in which the preview screen 264 of the music playback application is displayed on the display unit 251, the controller 180 may display the execution screen 260 of the music playback application on the display unit 251. The execution screen 260 of the music playback application may include the control menu 254 for the music playback application.

Meanwhile, the application corresponding to the touched objective may include an icon for terminating the application. As shown in this figure, the preview screen 264 of the music playback application may include an icon 265 for terminating the music playback application.

In a case where a second touch input is applied to the icon 265 for terminating the music playback application, the controller 180 may terminate the music playback application. The controller 180 may allow an objective corresponding to the music playback application among the objectives 263 respectively corresponding to the plurality of applications to disappear from the display unit 251.

Although it has been illustrated in this figure that the objectives 263 respectively corresponding to the plurality of applications are formed in a point shape, the shape of the objectives 263 is not limited thereto. For example, the objectives 263 may include at least one of icons, thumbnail images and preview images, corresponding to the respective applications.

According to exemplary embodiments, the aforementioned methods can be embodied as computer readable codes on a computer-readable recording medium. Examples of the computer readable recording medium include a ROM, RAM, CD-ROM, magnetic tapes, floppy disks, optical data storage devices, and carrier waves (such as data transmission through the Internet).

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal(1 00), comprising:
a display unit(151) configured to display an execution screen of an application being executed on a foreground;
a controller(180) configured to monitor applications being executed on a background, and select at least one of the applications on the background, and control the display unit(151) to display a control menu for the selected application together with the execution screen of the application being executed on the foreground.

2. The mobile terminal(1 00) of claim 1, wherein the controller(180) selects the at least one application for which control menu is to be displayed on the display unit(151), based on the priority order of the applications being executed on the background.

3. The mobile terminal(100) of any one of claims 1 and 2, wherein the controller(180) displays the execution screen of the selected application on the display unit(151), based on a touch input applied to the control menu for the selected application.

4. The mobile terminal(100) of any one of claims 1 and 2, wherein the display unit(151) displays a home screen, and the controller(180) controls the display unit(151) to display the control menu for the selected application together with the home screen.

5. The mobile terminal(100) of claim 2, wherein the control menu includes an icon for changing the selected application into another application, and
wherein as the selected application is changed into the another application, based on a touch input applied to the icon, the controller(180) allows the control menu for the selected application to disappear from the display unit(151), and displays a control menu for the changed application on the display unit(151).

6. The mobile terminal(100) of claim 5, wherein the controller(180) displays, on the display unit(151), an execution screen of the changed application together with the control menu for the changed application.

7. The mobile terminal(100) of claim 1, wherein the control menu includes an objective for displaying a list of the plurality of applications being executed on the foreground and background, and
wherein, when a touch input applied to the objective for displaying the list is sensed, the controller(180) displays the list of the plurality of applications on the display unit(151).

8. The mobile terminal(100) of claim 7, wherein, when any one is touched in the list of the plurality of applications, the controller(180) displays an execution screen of the touched application on the display unit(151).

9. The mobile terminal(100) of any one of claims 7 and 8, wherein the list of the plurality of applications includes preview screens respectively corresponding to the plurality of applications.

10. The mobile terminal(100) of claim 1, wherein the controller(180) displays, on the display unit(151), objectives respectively corresponding to the plurality of applications being executed on the foreground and background.

11. The mobile terminal(100) of claim 10, wherein, when a first touch input applied to at least one of the objectives respectively corresponding to the plurality of applications is sensed, the controller(180) displays, on the display unit(151), a preview screen of the application correspond to the touched objective, and
wherein, when a second touch input applied to the at least one is sensed, the controller(180) displays, on the display unit(151), an execution screen of the application corresponding to the touched objective.

12. The mobile terminal(100) of claim 11, wherein the preview screen of the application corresponding to the touched objective includes an icon for terminating the application.

13. The mobile terminal(100) of claim 12, wherein, when a touch input applied to the icon for terminating the application is sensed, the controller(180) terminates the application, and allows the objective corresponding to the terminated application to disappear from the display unit(151).

14. The mobile terminal(100) of any one of claims 10, 11, 12 and 13, wherein the objectives corresponding to the plurality of applications include thumbnail images corresponding to the plurality of applications, respectively.

15. A control method of a mobile terminal(100), comprising:
displaying, on a display unit(151), an executing screen of an application being executed on a foreground(S110);
monitoring applications being executed on a background(S120);
selecting at least one of the applications being executed on the background(S130); and
controlling the display unit to display a control menu for the selected application together with the execution screen of the application being executed on the foreground(S140).
